# EUROPEAN PATENT APPLICATION

(11) **EP 2 624 519 A1**
(43) Date of publication of application: **07.08.2013**
(21) Application number: 11872908.6
(22) Date of filing: 30.09.2011
(51) Int. Cl.: H04L 29/06

(54) **METHOD AND APPARATUS FOR NETWORK DIALING**

(71) Applicant: Huawei Technologies Co., Ltd, Shenzhen, Guangdong 518129 (CN)
(72) Inventor: YU, Zhouyi, Shenzhen Guangdong 518129 (CN); FU, Tianfu, Shenzhen Guangdong 518129 (CN); WANG, Xingrang, Shenzhen Guangdong 518129 (CN)
(74) Representative: Körber, Martin Hans
(86) International application number: PCT/CN2011/080490
(87) International publication number: WO 2013/044516

(57) **Abstract**

The present invention discloses a network dial-up method and apparatus which relate to the field of Internet technologies for accessing mass user terminals in the condition of limited network resources. The method includes: when more than one dial-up request is received, performing a negotiation in a Point-to-Point Protocol (PPP) discovery stage for each dial-up request respectively; creating a virtual PPP interface for each dial-up request; configuring the virtual PPP interfaces; coupling the virtual PPP interfaces to a physical PPP interface, where the physical PPP interface is coupled to more than one of the virtual PPP interfaces, and the physical PPP interface performs round robin processing for the virtual PPP interfaces; and performing negotiations in a PPP session stage by way of the virtual PPP interfaces, thereby succeeding in dial-up after completing the negotiations in the PPP session stage. The present invention is mainly applied in the broadband access field.

## Description

### FIELD OF THE INVENTION

The present invention relates to the field of Internet technologies and, in particular, to a network dial-up method and apparatus.

### BACKGROUND OF THE INVENTION

The Point-to-Point Protocol over Ethernet (Point-to-Point Protocol over Ethernet, PPPoE) is a transport protocol for broadband connecting a user terminal to the Internet. The user terminal includes a personal terminal and a local area network terminal covering a family network or a corporate network. With the popularity of broadband networks, carriers are doing their best to promote the development of flat networks by centralizing user terminal access, gateway, and security functions to optical line terminals (Optical Line Terminal, OLT) and bridge routers (Bridge Router, BR) of the carriers. The user terminal is simplified to a simple two-layer network and the carriers are responsible for maintaining the user terminal.

In the prior art of network dial-up, A gateway equipment is configured for a user terminal. A gateway equipment of each user terminal is connected to an OLT or BR, and the user terminal initiates a dial-up request to a broadband remote access server (Broadband Remote Access Server, BRAS) of a carrier via the OLT or BR to access a network in PPPoE Client mode by means of the gateway equipment configured on the user terminal.

During implementing the above network dial-up process, the inventor finds that the prior art has at least a problem that the gateway equipment of each user terminal initiates PPPoE Client dial-up requests to the BRAS, when the OLT or BR is connected to mass user terminals, numerous PPPoE Client programs need to be executed, wherein each PPPoE Client program requires one process and at least one timer. Generally speaking, process resources and timer resources of the OLT or BR are very limited and cannot meet the demand of accessing mass user terminals.

### SUMMARY OF THE INVENTION

Embodiments of the present invention provide a network dial-up method and apparatus for broadband accessing mass user terminals in the condition of limited network resources.

To achieve the above objective, embodiments of the present invention adopt the following technical solutions.

A network dial-up method is provided, including:
when more than one dial-up request is received, performing a negotiation in a PPP discovery stage for each dial-up request respectively;
creating a virtual PPP interface for each dial-up request; configuring the virtual PPP interfaces;
coupling the virtual PPP interfaces to a physical PPP interface, where the physical PPP interface is coupled to more than one of the virtual PPP interfaces, and the physical PPP interface performs round robin processing for the virtual PPP interfaces; and
performing negotiations in a PPP session stage by way of the virtual PPP interfaces, thereby succeeding in dial-up after completing the negotiations in the PPP session stage.

A network dial-up apparatus is provided, including:
a discovery negotiation unit configured to, when more than one dial-up request is received,
perform negotiations in a PPP discovery stage for each dial-up request respectively;
a creating unit configured to create a virtual PPP interface for each dial-up request;
a configuration unit adapted to configure the virtual PPP interfaces;
a coupling unit configured to couple the virtual PPP interfaces to a physical PPP interface, wherein the physical PPP interface is coupled to more than one of the virtual PPP interfaces, and the physical PPP interface performs round robin processing for the virtual PPP interfaces; and
a session negotiation unit configured to perform negotiations in a PPP session stage by way of the virtual PPP interfaces, thereby succeeding in dial-up after completing the negotiations in the PPP session stage.

The network dial-up method and apparatus provided by embodiments of the present invention is capable of creating a virtual PPP interface for each PPPoE Client dial-up request, and coupling virtual PPP interfaces to one physical PPP interface, where the physical PPP interface performs round robin processing for the PPPoE Client dial-up requests. Compared with the prior art where one PPPoE Client dial-up request uses one physical PPP interface, the present invention saves resources such as network processes and timers, and is capable of accessing mass user terminals in the condition of limited network resources.

### BRIEF DESCRIPTION OF THE DRAWINGS

In order to illustrate the technical solutions in embodiments of the present invention or the prior art more clearly, accompanying drawings needed in the embodiments or the prior art are illustrated briefly in the following. It is evident that the accompanying drawings are only some embodiments of the present invention, and persons skilled in the art may obtain other drawings according to the accompanying drawings without creative efforts.
FIG. 1 is a flowchart of a network dial-up method according to embodiment 1 of the present invention;
FIG. 2 is a flowchart of a network dial-up method according to embodiment 2 of the present invention;
FIG. 3 is a schematic structural diagram of a network dial-up apparatus according to embodiment 3 of the present invention;
FIG. 4 is a schematic structural diagram of a network dial-up apparatus according to embodiment 3 of the present invention; and
FIG. 5 is a schematic structural diagram of a network dial-up apparatus according to embodiment 3 of the present invention.

### DETAILED DESCRIPTION OF THE EMBODIMENTS

The technical solutions in the embodiments of the present invention are clearly and fully described in the following with reference to the accompanying drawings in the embodiments of the present invention. Obviously, the embodiments to be described are only a part rather than all of the embodiments of the present invention. Based on the embodiments of the present invention, all other embodiments obtained by persons skilled in the art without creative efforts shall fall within the protection scope of the present invention.

In embodiments of the present invention, a BR is used as an exemplary processing entity. In actual applications, the processing entity further includes but is not limited to an OLT.

### Embodiment 1

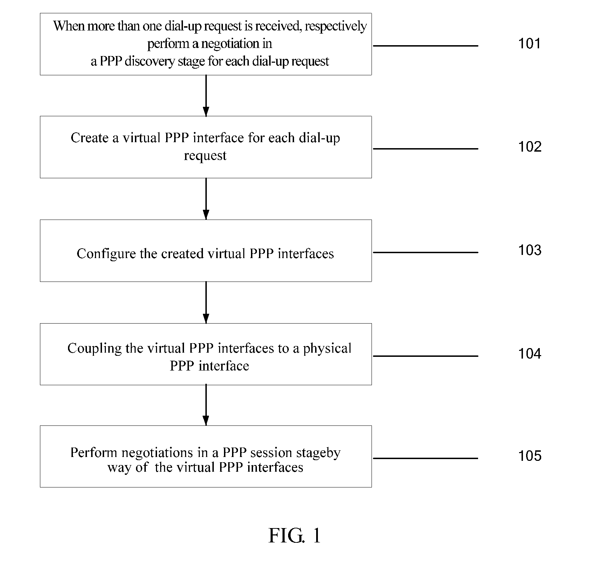

Embodiments of the present invention provide a network dial-up method. As shown in FIG. 1, the method includes the following steps.
101. When more than one dial-up request is received, respectively perform a negotiation in a PPP discovery stage for each dial-up request.

The dial-up request is a PPPoE Client dial-up request.

### 102. Create a virtual PPP interface for each dial-up request.

Virtual PPP interfaces are created, the number of the virtual PPP interfaces equals to the number of the dial-up requests, where each dial-up request corresponds to one virtual PPP interface.

### 103. Configure the created virtual PPP interfaces.

The virtual PPP interfaces are configured respectively, the configuration includes configuring addresses of session IDs and MAC addresses of user terminals' hardware to PPPoE layers of the virtual PPP interfaces.

### 104. Coupling the virtual PPP interfaces to a physical PPP interface.

The physical PPP interface is coupled to the virtual PPP interfaces, and a network includes at least one physical PPP interface. The physical PPP interface uses a global timer to perform round robin processing for the virtual PPP interfaces coupled to the physical PPP interface. Specifically, the physical PPP interface uses one CPU resource to process dial-up requests in a time sequence for virtual sessions corresponding to the virtual PPP interfaces, where the physical PPP interface queues the virtual sessions of the dial-up requests at a certain time, and then manages the virtual sessions by using a global timer. When processing a dial-up for a virtual session, the physical PPP interface uses the only one CPU to perform broadband access for the virtual session. During the broadband access of the virtual session, other virtual sessions managed by the global timer are waiting for access. After completing the broadband access for the virtual session, the global timer selects a next virtual session and hands it over to the CPU for broadband access. The global timer may queue the virtual sessions according to a time sequence of requesting broadband access by the virtual sessions, or may queue them according to importance of the virtual sessions. For example, a virtual session established by a local area network is more important than a virtual session established by a personal equipment, and the virtual session established by the local area network may be put in front and take precedence for broadband access. In actual applications, solutions of the present invention do not limit queuing modes for the global timer.

### 105. Perform negotiations in a PPP session stage by way of the virtual PPP interfaces.

For a virtual PPP interface, after completing a negotiation in the PPP session stage, dial-up of a user terminal corresponding to the virtual PPP interface is successful.

The network dial-up method provided by embodiments of the present invention is capable of creating a virtual PPP interface for each PPPoE Client dial-up request, and coupling virtual PPP interfaces to one physical PPP interface, where the physical PPP interface performs round robin processing for the PPPoE Client dial-up requests. Compared with the prior art where one PPPoE Client dial-up request occupies one physical PPP interface, the present invention saves resources such as network processes and timers, and is capable of accessing mass user terminals in the condition of limited network resources.

### Embodiment 2

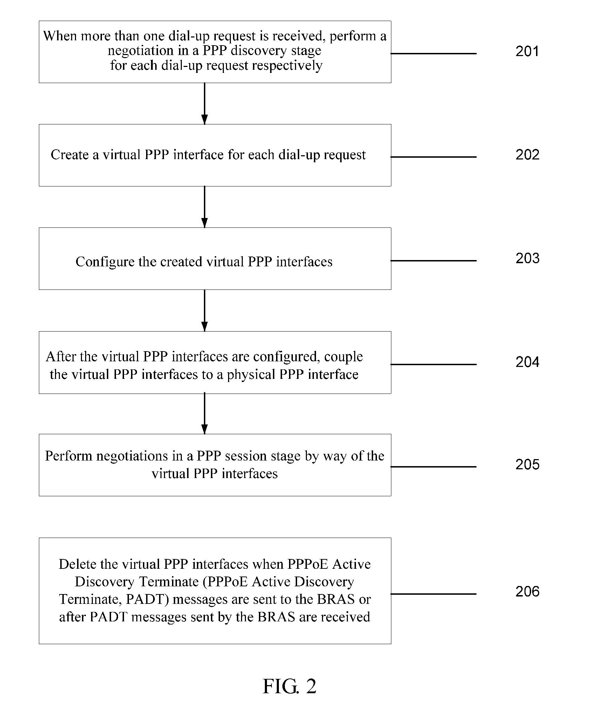

Embodiments of the present invention provide a network dial-up method. As shown in FIG. 2, the method includes the following steps.

201. When more than one dial-up request is received, perform a negotiation in a PPP discovery stage for each dial-up request respectively.

The dial-up request is a PPPoE Client dial-up request.

The purpose of the negotiation in the PPP discovery stage is to discover a MAC address of a user terminal and establish a session ID, preparing for a following session negotiation in a PPP session stage.

Specifically, the negotiation in the PPP discovery stage includes following steps: A BR sends a PPPoE Active Discovery Initiation (PPPoE Active Discovery Initiation, PADI) message to a BRAS, creates a new session in a session table, where a message sending interface, a MAC address, or a combination of a MAC address and a virtual local area network (Virtual Local Area Network, VLAN) address may be utilized as a key of the new session, and content of the new session may be set according to service requirements.

A destination address of the PADI message is a broadcast address 0×ffffffffffff of an Ethernet, a value of a CODE field in basic information of the PADI message is 0×09, a value of a SESSION_ID (Identity, ID) is 0×0000. The PADI message should include at least one Service-Name TAG for requesting the BRAS to provide a service, where a value of a TAG TYPE of the Service-Name TAG is 0×0101.

After receiving the PADI message, the BRAS sends a PPPoE Active Discovery Offer (PPPoE Active Discovery Offer, PADO) message to the BR as a response to the request of the PADI message. The value of the CODE field in the PADO message is 0×07 and the value of a SESSION_ID is still 0×0000. The PADO message must include one AC-Name TAG, where a value of a TAG TYPE of the AC-Name TAG is 0×0102. In addition, the PADO message must further include one or more Service-Name TAGs for indicating service types which are available for the user terminal.

The BR selects a proper PADO message from a plurality of PADO messages that could be received, and then sends a PPPoE Active Discover Request (PPPoE Active Discovery Request, PADR) message to a selected BRAS. The value of the CODE field in the PADR message is 0×19 and the value of a SESSION_ID is still 0×0000. The PADR message should include one Service-Name TAG for determining a service type which the user terminal requests from the BRAS. If the BR receives no PADO message within a specified period, a PADI message should be resent and waiting time be doubled.

After receiving the PADR message, the BRAS sends a PPPoE Active Discovery Session-confirmation (PPPoE Active Discovery Session-confirmation, PADS) message. The value of the CODE field in the PADS message is 0×65 and the value of a SESSION_ID is a unique PPPoE session ID number generated by the BRAS. The PADS message should further include a Service-Name TAG to confirm a service to be provided for the BR. After the BR receives the PADS message, the negotiation in the discovery stage is completed.

### 202. Create a virtual PPP interface for each dial-up request.

The BR assigns a virtual PPP interface for each user terminal which initiates a dial-up request, and stores PPP negotiation parameters which are negotiated in the PPP discovery stage, such as an authentication mode, an authentication user name, and an authentication password, in the interface, so that later the BRAS may identify the user terminal according to the authentication mode, authentication user name, and authentication password.

### 203. Configure the created virtual PPP interfaces.

The PPP interfaces are configured respectively, and the number of the virtual PPP interfaces equals to the number of the dial-up requests initiated by the user terminals.

A protocol stack of the virtual PPP interfaces is divided into two layers, a lower layer is a PPPoE layer, an upper layer is a PPP layer, and the lower layer parses and encapsulates PPPoE message headers to provide service for the upper layer PPP coordination.

After the virtual PPP interfaces are created, information obtained in step 201 such as the MAC address and the session ID is configured to the PPPoE layer of the virtual PPP interfaces.

### 204. After the virtual PPP interfaces are configured, couple the virtual PPP interfaces to a physical PPP interface.

When the virtual PPP interfaces are coupled to the physical PPP interface, only one process is used to virtualize a plurality of sessions, and in the plurality of virtual sessions, one global timer is used to manage the virtual sessions in round robin mode.

In particular, one physical PPP interface uses one CPU resource to process dial-up requests according to a time sequence for a plurality of virtual sessions, where the physical PPP interface queues the virtual sessions of dial-up requests at a certain time, and then manages the virtual sessions by using a global timer. When processing a dial-up for a virtual session, the physical PPP interface uses the only one CPU to perform broadband access for the virtual session. During the broadband access of this virtual session, other virtual sessions are waiting for broadband access under management of the global timer. After the broadband access for the virtual session is completed, the global timer selects a next virtual session and hands it over to the CPU for broadband access. The global timer may queue the virtual sessions in time sequence according to the time of the virtual sessions requesting broadband access, or may queue them according to importance of the virtual sessions. For example, a virtual session established by a local area network is more important than a virtual session established by personal equipment, and the virtual session established by the local area network may be put in front and take precedence for broadband access. In actual applications, solutions of the present invention do not limit queuing modes for the global timer.

The embodiment of the present invention features that a workload which needs to be completed by physical PPP interfaces simultaneously at a certain time is converted to a workload which can be completed in sequence by one physical PPP interface within a period of time. For example, for a thousand dial-up requests, a thousand physical PPP interfaces need to be used in the prior art to process the thousand dial-up requests. While in the embodiment of the present invention, one physical PPP interface may be used to process the thousand dial-up requests. In cases when the numbers of dial-up requests are the same, the former completes the work at a higher speed than the later does, but the number of user terminals for broadband access is limited by a condition of physical resources.

In the embodiment of the present invention, one physical PPP interface may be coupled to different numbers of virtual PPP interfaces according to CPU performance of the physical PPP interface, that is, one physical PPP interface is capable of completing broadband access for user terminals. For example, if there are ten physical PPP interfaces in a network, and one physical PPP interface may be coupled to a hundred virtual PPP interfaces, then the network may provide broadband access for a thousand user terminals. Compared with the case in the prior art where ten physical PPP interfaces may provide broadband access for only ten user terminals, the present invention increases the number of user terminals for broadband access without reducing the number of physical PPP interfaces in the network, or in the condition of a fixed number of user terminals in the network, the present invention saves resources of physical PPP interfaces.

### 205. Perform negotiations in a PPP session stage by way of the virtual PPP interfaces.

For a virtual PPP interface, the negotiation in the PPP session stage is to send control messages such as a Link Control Protocol (Link Control Protocol, LCP) message and an IP

Control Protocol (IP Control Protocol, IPCP) message to the PPP layer after the control messages are encapsulated with a PPPoE header by using an output function coupled to the virtual PPP interface. The PPP layer removes the PPPoE headers from the received control messages by using an input function coupled to the virtual PPP interface, and sends the received control messages stripped of the PPPoE headers to the BRAS for processing.

It should be noted that in the PPP session stage, the session parameters obtained in the negotiation in the PPP discovery stage is used to perform the negotiation in the session stage, and in the negotiation process in the PPP session stage, the session ID remains unchanged. After the negotiation in the PPP session stage is completed, the user terminal dials up successfully and is connected to the broadband network.

### 206. Delete the virtual PPP interfaces when PPPoE Active Discovery Terminate (PPPoE Active Discovery Terminate, PADT) messages are sent to the BRAS or after PADT messages sent by the BRAS are received.

The virtual PPP interfaces are deleted in the following two cases.
1) When the user terminal finishes communication and needs to break the broadband access, the BR sends a PADT message to the BRAS to request deleting the virtual PPP interfaces.
2) When the BRAS needs to break the broadband access for the user terminal due to network causes, the BR receives a PADT message sent by the BRAS and then deletes the virtual PPP interfaces.

After the virtual PPP interfaces are deleted, the virtual PPP interfaces resource is released, and if the user terminal needs broadband access again, steps 201 to 205 are repeated.

The network dial-up method provided by embodiments of the present invention is capable of creating a virtual PPP interface for each PPPoE Client dial-up request, and coupling PPP interfaces to one physical PPP interface, where the physical PPP interface performs round robin processing for the PPPoE Client dial-up requests. Compared with the prior art where one PPPoE Client dial-up request uses one physical PPP interface, the present invention saves resources such as network processes and timers, and is capable of accessing mass user terminals in the condition of limited network resources.

In addition, the network dial-up method provided by embodiments of the present invention are capable of virtualizing mass virtual PPP interfaces by using a limited number of physical PPP interfaces, where no resource switchover problem exists between the physical PPP interfaces and the BR is not required to perform operations such as scheduling between resources, which solves the problem of mass dial-ups by edge user terminals.

### Embodiment 3

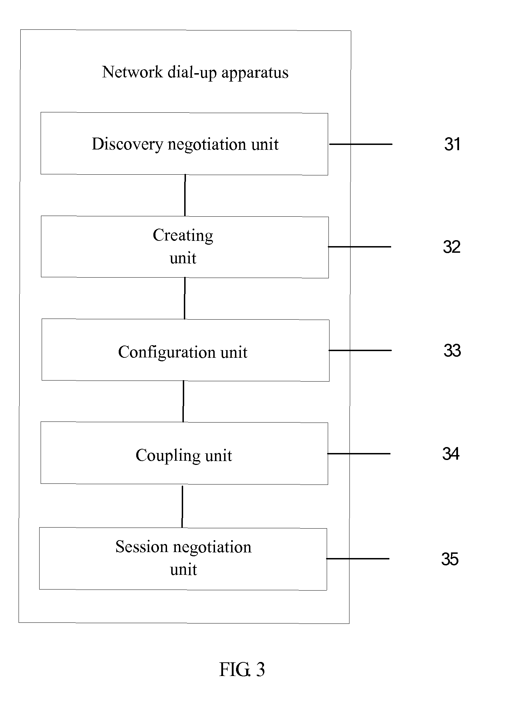

Embodiments of the present invention provide a network dial-up apparatus. As shown in FIG. 3, the apparatus includes:
a discovery negotiation unit 31, a creating unit 32, a configuration unit 33, a coupling unit 34, and a session negotiation unit 35.

The discovery negotiation unit 31 is configured to, when more than one dial-up request is received, perform negotiations in a PPP discovery stage for each dial-up request respectively. The dial-up request is a PPPoE Client dial-up request.

The purpose of the negotiation in the PPP discovery stage is to discover a MAC address of a user terminal and an established session ID, which prepares for a following negotiation in a PPP session stage.

The creating unit 32 is configured to create a virtual PPP interface for each dial-up request. The configuration unit 33 is adapted to configure the virtual PPP interfaces.

Configuring the virtual PPP interfaces means configuring each virtual PPP interface respectively.

The coupling unit 34 is configured to couple the virtual PPP interfaces to a physical PPP interface.

One physical PPP interface may be coupled to more than one of the virtual PPP interfaces and the physical PPP interface performs round robin processing for the virtual PPP interfaces. The session negotiation unit 35 is configured to perform the negotiations in the PPP session stage by way of the virtual PPP interfaces.

Session parameters obtained in the negotiation in the PPP discovery stage is used to perform the negotiations in the PPP session stage, and in the negotiation process in the PPP session stage, the session ID remains unchanged.

After the negotiation in the PPP session stage is completed, dialing up is successful.

Further, the creating unit 32 is specifically configured to store an authentication mode, an authentication user name, and an authentication password of the negotiation in the discovery stage to each virtual PPP interface respectively.

Further, the configuration unit 33 is specifically adapted to configure session IDs and MAC addresses of the user terminal to PPPoE layers of the virtual PPP interfaces.

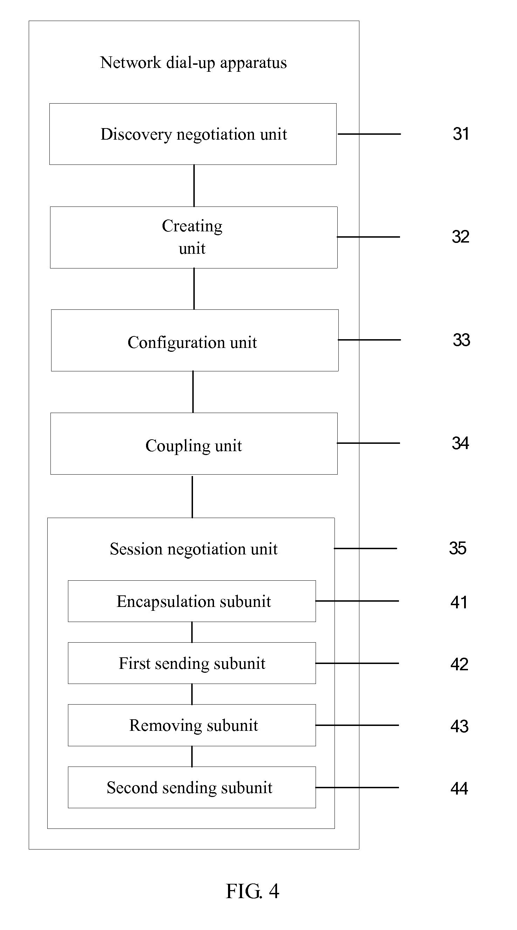

Further, as shown in FIG. 4, the session negotiation unit 34 may include:
an encapsulation subunit 41 configured to encapsulate PPPoE headers to LCP messages and
IPCP messages by using an output function coupled to the virtual PPP interfaces;
a first sending subunit 42 configured to send the LCP messages and the IPCP messages encapsulated by the PPPoE headers to the PPP layers;
a removing subunit 43 configured to remove the PPPoE headers from the LCP messages and the IPCP messages encapsulated by the PPPoE headers by using an input function coupled to the virtual PPP interfaces; and
a second sending subunit 44 configured to send the LCP messages and the IPCP messages stripped of the PPPoE headers to the BRAS.

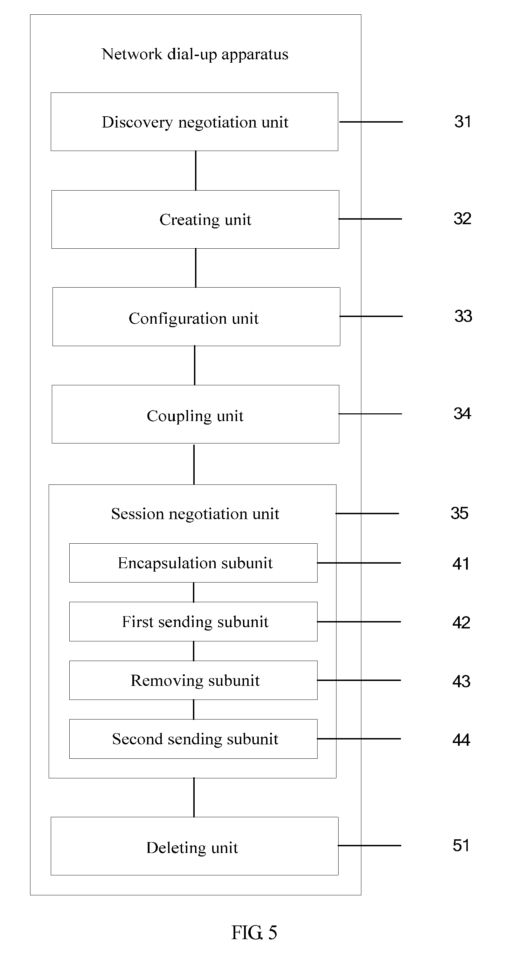

Further, as shown in FIG. 5, the network dial-up apparatus may include:
a deleting unit 51 configured to, when PADT messages are sent to the BRAS, or after PADT messages sent by the BRAS are received, delete the virtual PPP interfaces.

The network dial-up apparatus provided by embodiments of the present invention is capable of creating a virtual PPP interface for each PPPoE Client dial-up request, and coupling virtual PPP interfaces to one physical PPP interface, where the physical PPP interface performs round robin processing for the PPPoE Client dial-up requests. Compared with the prior art where one PPPoE Client dial-up request occupies one physical PPP interface, the present invention saves resources such as network processes and timers, and is capable of accessing mass user terminals in the condition of limited network resources.

By the embodiments described above, persons skilled in the art may clearly understand that the present invention may be implemented by software with necessary common hardware. Specifically, the present invention may also be implemented by only hardware. However, the former is the preferred implementation mode. Based on such understanding, the essence of the technical solution of the present invention or the part of that makes a contribution to the prior art may be implemented in the form of software product. The computer software product is stored in a readable storage medium such as a computer floppy disk, a hard disk, or an optical disk, and includes instructions to enable computer equipment (which may be a personal computer, a server, or network equipment) to execute the method described in embodiments of the present invention.

The above are only specific embodiments of the present invention. The protection scope of the present invention, however, is not limited thereto. Any alteration or substitution that is within the technical scope disclosed by the present invention and can easily occur to persons skilled in the art should be covered in the protection scope of the present invention. Hence the protection scope of the present invention should be determined by the statements in Claims.

## Claims

1. A network dial-up method, comprising:
when more than one dial-up request is received, performing a negotiation in a Point-to-Point Protocol (PPP) discovery stage for each dial-up request respectively;
creating a virtual PPP interface for each dial-up request;
configuring the virtual PPP interfaces;
coupling the virtual PPP interfaces to a physical PPP interface, wherein the physical PPP interface is coupled to more than one of the virtual PPP interfaces, and the physical PPP interface performs round robin processing for the virtual PPP interfaces; and
performing negotiations in a PPP session stage by way of the virtual PPP interfaces, thereby succeeding in dial-up after completing the negotiations in the PPP session stage.

2. The network dial-up method according to claim 1, wherein the creating a virtual PPP interface for each dial-up request comprises:
storing an authentication mode, an authentication user name, and an authentication password negotiated in the PPP discovery stage in each virtual PPP interface respectively.

3. The network dial-up method according to claim 1 or 2, wherein the configuring the virtual PPP interfaces comprises:
configuring addresses of session identities (IDs) and a Media Access Control (MAC) addresses of user terminals' hardware to a Point-to-Point Protocol over Ethernet (PPPoE) layers of the virtual PPP interfaces.

4. The network dial-up method according to any one of claims 1 to 3, wherein the performing negotiations in a PPP session stage by way of the virtual PPP interfaces comprises:
encapsulating PPPoE headers to Link Control Protocol (LCP) messages and IP Control Protocol (IPCP) messages by using an output function coupled to the virtual PPP interfaces;
sending the LCP messages and the IPCP messages encapsulated by the PPPoE headers to PPP layers;
removing the PPPoE headers of the LCP messages and the IPCP messages encapsulated by the PPPoE headers by using an input function coupled to the virtual PPP interfaces; and
sending the LCP messages and the IPCP messages stripped of the PPPoE headers to a broadband remote access server (BRAS).

5. The network dial-up method according to any one of claims 1 to 4, further comprising:
deleting the virtual PPP interfaces, when PPPoE Active Discovery Terminate (PADT) messages are sent to the BRAS, or after PADT messages sent by the BRAS are received.

6. A network dial-up apparatus, comprising:
a discovery negotiation unit configured to, when more than one dial-up request is received, perform negotiations in a Point-to-Point Protocol (PPP) discovery stage for each dial-up request respectively;
a creating unit configured to create a virtual PPP interface for each dial-up request;
a configuration unit adapted to configure the virtual PPP interfaces;
a coupling unit configured to couple the virtual PPP interfaces to a physical PPP interface, wherein the physical PPP interface is coupled to more than one of the virtual PPP interfaces, and the physical PPP interface performs round robin processing for the virtual PPP interfaces; and
a session negotiation unit configured to perform negotiations in a PPP session stage by way of the virtual PPP interfaces, thereby succeeding in dial-up after completing the negotiations in the PPP session stage.

7. The network dial-up apparatus according to claim 6, wherein the creating unit is specifically configured to:
store an authentication mode, an authentication user name, and an authentication password negotiated in the PPP discovery stage in each virtual PPP interface respectively.

8. The network dial-up apparatus according to claim 6 or 7, wherein the configuration unit is specifically adapted to configure addresses of session identities (IDs) and Media Access Control (MAC) addresses of user terminals' hardware to a Point-to-Point Protocol over Ethernet (PPPoE) layers of the virtual PPP interfaces.

9. The network dial-up apparatus according to any one of claims 6 to 8, wherein the session negotiation unit further comprises:
an encapsulation subunit configured to encapsulate PPPoE headers to Link Control Protocol (LCP) messages and IP Control Protocol (IPCP) messages by using an output function coupled to the virtual PPP interfaces;
a first sending subunit configured to send the LCP messages and the IPCP messages encapsulated by the PPPoE headers to PPP layers;
a removing subunit configured to remove the PPPoE headers from the LCP messages and the IPCP messages encapsulated by the PPPoE headers by using an input function coupled to the virtual PPP interfaces; and
a second sending subunit configured to send the LCP messages and the IPCP messages stripped of the PPPoE headers to a broadband remote access server (BRAS).

10. The network dial-up apparatus according to any one of claims 6 to 9, further comprising:
a deleting unit configured to, when PPPoE Active Discovery Terminate (PADT) messages are sent to the BRAS, or after PADT messages sent by the BRAS are received, delete the virtual PPP interfaces.
